(19) Europäisches Patentamt
European Patent Office
Office européen des brevets

(11) Veröffentlichungsnummer : **0 284 564 B1**

(12) # EUROPÄISCHE PATENTSCHRIFT

(45) Veröffentlichungstag der Patentschrift :
**20.05.92 Patentblatt 92/21**

(51) Int. Cl.[5] : **C08J 7/00,** C08G 59/38, C08L 63/00

(21) Anmeldenummer : **88810177.1**

(22) Anmeldetag : **18.03.88**

(54) **Mehrschichtiger, heisshärtbarer Klebstoffilm.**

(30) Priorität : **24.03.87 CH 1118/87**

(43) Veröffentlichungstag der Anmeldung :
**28.09.88 Patentblatt 88/39**

(45) Bekanntmachung des Hinweises auf die Patenterteilung :
**20.05.92 Patentblatt 92/21**

(84) Benannte Vertragsstaaten :
**CH DE FR GB IT LI NL SE**

(56) Entgegenhaltungen :
**EP-A- 0 279 777**
**WPIL, File Supplier, Derwent, Publications, LTD., London, GB; AN=83-62001K**

(73) Patentinhaber : **CIBA-GEIGY AG**
**Klybeckstrasse 141**
**CH-4002 Basel (CH)**

(72) Erfinder : **Urech, Karl**
**Muttenzerstrasse 91/7**
**CH-4133 Pratteln (CH)**
Erfinder : **Moser, Roland**
**Säckingerstrasse 10**
**CH-4058 Basel (CH)**



Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft einen mehrschichtigen heisshärtbaren Klebstoffilm auf Basis von Epoxidharzen und Dicyandiamid als Härtungsmittel, enthaltend eine klebrige äussere härtbare Schicht und eine trockene äussere härtbare Schicht, und dessen Verwendung zum Verkleben von Konstruktionsteilen, insbesondere von tragenden und nichtgereinigten Konstruktionsteilen aus Metall.

Zum Verbinden von Konstruktionsteilen werden bereits Klebstoffilme anstelle des Punktschweissens von Falznähten oder des Verklebens mit Klebstoffpasten eingesetzt. Wie aus der JP-Anmeldung Kokai 57-207656 hervorgeht, erreicht man durch Verwendung von Klebstoffilmen anstelle von Klebstoffpasten oder -pulvern ausser einer besseren Handhabung auch eine gleichmässigere Verteilung des Klebstoffes auf den zu verklebenden Teilen bzw. Flächen. In der genannten JP-Patentanmeldung werden unter anderem auch Klebstoffilme auf Basis von konventionellen Epoxidharzen offenbart, die ausserdem als Härtungsmittel Carbonsäureanhydride enthalten.

In der Ep-A-0279777 wird ein mehr schichtiger Struktur Klebstoffilm offenbart, der aus einem Elastomer träger film besteht, welcher auf beiden Seiten mit einem duromeren Konstruktions Klebstoffilm beschichtet ist ud der sich zum Verkleben von tragenden Teilen eignet.

Die vorliegende Erfindung betrifft einen mehrschichtigen heisshärtbaren Klebstoffilm mit einer klebrigen äusseren härtbaren Schicht A, enthaltend

(a) 15 bis 40 Gew.-% eines epoxidgruppenhaltigen Adduktes I aus einem aromatischen Di- oder Polyglycidylether mit einem Epoxidgehalt von 3,5 bis 6,5 Aequivalenten/kg und einem carboxylterminierten Butadien-Acrylnitril-Kautschuk oder einem carboxylterminierten Polyester,
(b) 15 bis 40 Gew.-% eines epoxidgruppenhaltigen Adduktes II aus einem aromatischen Diglycidylether mit einem Epoxidgehalt von 0,3 bis 3,0 Aequivalenten/kg und einem carboxylterminierten Butadien-Acrylnitril-Kautschuk oder einem carboxylterminierten Polyester,
(c) 16 bis 30 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg
(e) 10 bis 25 Gew.-% eines oder mehrerer üblicher Füllstoffe,
(f) 1 bis 6 Gew.-% Dicyandiamid
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen,

einer trockenen äusseren härtbaren Schicht B, enthaltend

(a) 15 bis 40 Gew.-% eines epoxidgruppenhaltigen Adduktes I
(b) 15 bis 40 Gew.-% eines epoxidgruppenhaltigen Adduktes II
(c) 0 bis 15 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 15 bis 40 Gew.-% eines oder mehrerer üblicher Füllstoffe,
(f) 1 bis 6 Gew.-% Dicyandiamid,
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen,

und gegebenenfalls einem Trägermaterial zwischen den Schichten A und B.

Vorzugsweise enthält die Schicht A im erfindungsgemässen Klebstoffilm

(a) 20 bis 30 Gew.-% eines epoxidgruppenhaltigen Adduktes I,
(b) 20 bis 30 Gew.-% eines epoxidgruppenhaltigen Adduktes II,
(c) 16 bis 30 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 10 bis 25 Gew.-% eines oder mehrerer üblicher Füllstoffe,
(f) 1 bis 6 Gew.-% Dicyandiamid
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen.

Die Schicht B im erfindungsgemässen Klebstoffilm enthält vorzugsweise

(a) 20 bis 30 Gew.-% eines epoxidgruppenhaltigen Adduktes I,
(b) 20 bis 30 Gew.-% eines epoxidgruppenhaltigen Adduktes II,

(c) 0 bis 15 Gew.-% eines aromatischen Di- oder Polyglycidylethers mit einem Epoxidgehalt von 3,5 bis 6,5 Aequivalenten/kg,

(d) 0 bis 6 Gew.-% eines aromatischen Diglycidylethers mit einem Epoxidgehalt von 0,3 bis 3,0 Aequivalenten/kg,

(e) 15 bis 40 Gew.-% eines oder mehrerer üblicher Füllstoffe,

(f) 1 bis 6 Gew.-% Dicyandiamid,

(g) 0 bis 2 Gew.-% eines Härtungsbeschleunigers und gegebenenfalls

(h) weitere übliche Zusätze, wobei die Komponenten (a) bis (h) sich auf 100 Gew.-% ergänzen.

Die im erfindungsgemässen Klebstoffilm als Komponenten (a) und (b) enthaltenen epoxidgruppenhaltigen Addukte I und II sind bekannt. Beispielsweise werden epoxidgruppenhaltige Addukte aus Epoxidharzen und carboxylterminiertem Butadien-Acrylnitril-Kautschuk in der DE-OS 22 05 039, in Polymer Age, Heft 6, April 1975, Seite 96-98, und in Amer. Chem. Soc. Org. Coat. Plast. Chem. Pap. 35 (1975), Nr. 2, Seite 333-340, beschrieben und können hergestellt werden, indem man einen aromatischen, einen entsprechenden Epoxidgehalt aufweisenden Di- oder Polyglycidylether mit einem carboxylterminierten Butadien-Acrylnitril-Kautschuk im Gewichtsverhältnis 90:10 bis 70;30, vorzugsweise 85:15 bis 75:25, gegebenenfalls in Gegenwart eines Katalysators, wie Triphenylphosphit oder Bisphenol A, bei erhöhter Temperatur umsetzt.

Carboxylterminierte Butadien-Acrylnitril-Kautschuke sind im Handel von der Firma B.F. Goodrich unter Bezeichnung "Hycar" erhältlich und entsprechen der allgemeinen Formel

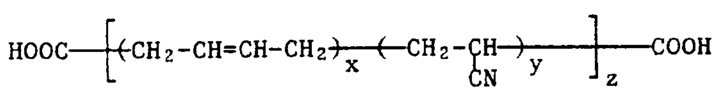

worin x eine Zahl von 1-10, vorzugsweise 2-7, y eine Zahl von 1-5, vorzugsweise 1-3, und z eine Zahl von 1-30, vorzugsweise 5-15, bedeuten.

Epoxidgruppenhaltige Addukte aus aromatischen Di- und Polyglycidylethern und carboxylterminierten Polyestern werden beispielsweise in der DE-OS 17 70 032 und in der DE-OS 24 59 447 offenbart und können hergestellt werden, indem man aromatische Di- oder Polyglycidylether z.B. mit einem Polyester der Formeln I-III

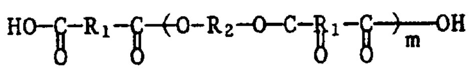 (I),

worin $R_1$ und $R_2$ aliphatische Reste darstellen und m eine solche Zahl bedeutet, dass die Summe aus der Anzahl der C-Atome in $R_1$ und $R_2$ mindestens 50 beträgt,

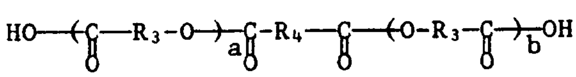 (II) ,

worin $R_3$ ein Alkylen mit mindestens 4 C-Atomen bedeutet, $R_4$ für einen aliphatischen Rest steht und a und b solche Zahlen bedeuten, dass die Summe aus der Anzahl der C-Atome in $R_3$ und $R_4$ mindestens 50 beträgt,

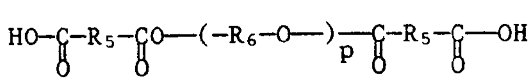 (III),

worin $R_5$ einen aliphatischen Rest bedeutet, $R_6$ für ein Alkylen mit mindestens 5 C-Atomen steht und p eine solche Zahl ist, dass die Summe aus der Anzahl der C-Atome in $R_5$ mindestens 50 beträgt, im Gewichtsverhältnis von 90:10 bis 70:30, vorzugsweise von 85:15 bis 75:25, gegebenenfalls in Gegenwart eines Katalysators, bei erhöhter Temperatur umsetzt.

Im Polyester der Formel I kann der Rest $R_1$ sich beispielsweise von folgenden aliphatischen Dicarbonsäuren ableiten: Adipinsäure, Pimelinsäure, Korksäure, Azelainsäure, Sebacinsäure, Nonandicarbonsäure, Decandicarbonsäure, Undecandicarbonsäure, Dodecandicarbonsäure, Allylbernsteinsäure, Dodecylbernsteinsäure und Dodecenylbernsteinsäure. Als aliphatische Diole, von denen sich der Rest $R_2$ in der Formel I ableiten kann, seien beispielsweise genannt: 1,4-Butandiol, 1,5-Pentandiol, Neopentylglykol, 1,6-Kexandiol, 1,7-Heptandiol, 1,8-Octandiol, 1,9-Nonandiol, 1,10-Decandiol, 1,11-Undecandiol, 1,12-Dodecandiol, 1,6-Dihydroxy-2,2,4-trimethylhexan, 1,6-Dihydroxy-2,4,4-trimethylhexan.

Die Polyester der Formel II sind Anlagerungsprodukte von (a + b) Mol eines Laktons an 1 Mol einer aliphatischen Dicarbonsäure, beispielsweise die Anlagerungsprodukte von (a + b) Mol ε-Caprolakton oder Exaltolid (Lakton von 15-Hydroxyheptadecansäure) an 1 Mol Maleinsäure, Bernsteinsäure, Adipinsäure oder Sebacinsäure.

Die Polyester der Formel III sind Kondensationsprodukte, die durch Veresterung von 2 Mol einer aliphatischen Dicarbonsäure, wie Maleinsäure, Bernsteinsäure, Adipinsäure oder Sebacinsäure, oder 2 Mol eines Dicarbonsäureanhydrids, wie Maleinsäureanhydrid, mit je 1 Mol eines Polyglykols der Formel

$$HO-\left[R_6-O\right]_p-H \quad ,$$

worin $R_6$ und p die Bedeutung wie in Formel III haben, erhalten werden.

Aromatische Di- und Polyglycidylether, die zur Herstellung der epoxidgruppenhaltigen Addukte I und II verwendet werden und die ausserdem als Komponente (c) und gegebenenfalls Komponente (d) in den härtbaren Schichten A und B des erfindungsgemässen Klebstoffilms enthalten sind, stellen bekannte Verbindungen dar und sind zum Teil im Handel erhältlich. Die Di- und Polyglycidylether können beispielsweise durch Umsetzung einer mindestens zwei phenolische Hydroxylgruppen pro Molekül enthaltenden Verbindung mit Epichlorhydrin unter alkalischen Bedingungen oder auch in Gegenwart eines sauren Katalysators mit nachfolgender Alkalibehandlung hergestellt werden. Je nach eingesetzter Menge Epichlorhydrin erhält man niedermolekulare Glycidylether mit hohem Epoxidgehalt oder höhermolekulare Glycidylether mit niedrigem Epoxidgehalt. Als mindestens zwei phenolische Hydroxylgruppen enthaltende Verbindungen können beispielsweise Phenole, wie Resorcin oder Hydrochinon, sowie mehrkernige Phenole, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (Bis-phenol A) und 2,2-Bis-(3,5-dibrom-4-hydroxyphenyl)-propan, sowie auch aus Aldehyden, wie Formaldehyd, Acetaldehyd, Chloral und Furfurol, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert.-Butylphenol, gebildete Novolake eingesetzt werden.

Als übliche Füllstoffe (e) können in der härtbaren Schicht A und härtbaren Schicht B des erfindungsgemässen Klebstoffilmes beispielsweise Bitumen, Talk, Kreide, Wollastonite, Glimmer, Quarzmehl, Aluminiumoxidhydrat, Bentonite, Kaolin, Kieselsäureaerogel, Metallpulver, wie Aluminium- oder Eisenpulver, Pigmente oder Farbstoffe, wie Russ, Oxidfarben und Titandioxid, oder Flammschutzmittel enthalten sein. Vorzugsweise enthalten die härtbaren Schichten A und B mineralische Füllstoffe und Russ.

Als Beschleuniger (g) setzt man die üblichen für die Härtung von Epoxidharzen mit Dicyandiamid bekannten Beschleuniger ein, wie beispielsweise Alkalimetallalkoholate, tertiäre Amine, wie Benzyldimethylamin, quaternäre Ammoniumverbindungen, substituierten Harnstoff, wie N-(4-Chlorphenyl)-N,N′-dimethylharnstoff oder N-(3-Chlor-4-methylphenyl)-N,N′-dimethylharnstoff, eine Mannichbase, wie 2,4,6-Tris-(dimethylaminomethyl)-phenol, Imidazol oder Imidazolderivate, wie 2-Methylimidazol, 2-Ethylimidazol, 2-Ethyl-4-methylimidazol, 2-Phenylimidazol oder Benzimidazol, und $BCl_3$- oder $BF_3$-Komplexe mit tertiären Aminen, wie Trimethylamin, Piperidin, Pyridin oder Hexamethylentetramin. Als Beschleuniger setzt man vorzugsweise ein Imidazol, insbesondere 2-Ethylimidazol, substituierte Harnstoffe oder $BF_3$-Komplexe mit tertiären Aminen ein.

Als weitere übliche Zusätze (h), die gegebenenfalls in der heisshärtbaren Schicht A und gegebenenfalls in der heisshärtbaren Schicht B der erfindungsgemässen Klebstoffilme enthalten sein können, kommen zum Beispiel Benetzungsmittel, wie Epoxysilane, Verlaufmittel, Thixotropiemittel, Weichmacher, Haftvermittler, Antioxidantien, Korrosionsinhibitoren, wie d-Limonen, oder Licht schutzmittel in Frage. Der Anteil an weiteren üblichen Zusätzen (h) beträgt vorzugsweise bis zu 8 Gew.-%, bezogen auf das Gesamtgewicht der Komponenten (a) bis (h) in der heisshärtbaren Schicht A oder B.

Die erfindungsgemässen Klebstoffilme können nur aus einer heisshärtbaren Schicht A und einer heisshärtbaren Schicht B bestehen, enthalten aber vorzugsweise zwischen der Schicht A und Schicht B ein Trägermaterial. Die erfindungsgemässen Klebstoffilme können auch aus mehreren Schichten A und B bestehen.

Geeignete Trägermaterialien für die erfindungsgemässen Klebstoffilme sind beispielsweise gewobene, gestrickte (knitted), vliesförmige, mittels mechanischer, thermischer oder chemischer Bindung angeordnete Fasern. Diese können beispielsweise aus Polyvinylchlorid, Polyacrylnitril-Acrylsäureester-Copolymeren, aromatischen oder aliphatischen Polyamiden, aromatischen oder aliphatischen Polyestern, Polyethylen, Polypropylen, Polystyrol, Copolymeren aus Styrol und Ethylen oder Propylen, Cellulose oder Glas bestehen. Als Trägermaterialien können auch einfache, strukturierte oder perforierte, zum Beispiel Schlitze aufweisende Folien aus Thermoplasten eingesetzt werden. Sollen Verklebungen mit hohen Schälfestigkeiten erreicht werden, so können die erfindungsgemässen Klebstoffilme als Trägermaterial Folien aus Gummi, wie beispielsweise aus Styrol-Butadien-Kautschuk oder Acrylnitril-Butadien-Kautschuk, enthalten. Vorzugsweise verwendet man für die Klebstoffilme vliesförmige Trägermaterialien.

Die Herstellung der erfindungsgemässen Klebstoffilme erfolgt nach bekannten Methoden. Dabei kann man beispielsweise das Komponentengemisch für die Komponente A in Form einer organischen Lösung oder als Schmelze mit einem Rakel auf eine abziehbare Trennschicht, wie Trennfolien aus Polyethylen oder Polyester, oder auf silikoniertes Trennpapier, auftragen. Bei Verwendung eines Trägermaterials wird dieses dann auf die Schicht A aufgelegt und anschliessend wird auf die unbeschichtete Seite des Trägermaterials das Komponentengemisch für die Schicht B in gleicher Weise aufgetragen. Verwendet man zur Herstellung der erfindungsgemässen Klebstoffilme kein Trägermaterial, so wird die Schicht B direkt auf die Schicht A nach Verdampfen des Lösungsmittels bzw. Abkühlen der Schmelze aufgetragen. Gewünschtenfalls können auf diese Weise mehrere Schichten in alternierender Anordnung aufgetragen werden.

Die erfindungsgemässen Klebstoffilme eignen sich zum Verkleben von verschiedenen Substraten, wie Keramik, Porzellan, Glas, Holz, Kunststoffen und Metallen, und werden besonders zum Verkleben von Metallen, wie Aluminium, Kupfer, Eisen oder Stahl, insbesondere von tragenden und nichtgereinigten Konstruktionsteilen.

Die erfindungsgemässen Klebstoffilme zeichnen sich durch eine gute Kontakthaftung auf öligen Metalloberflächen aus, so dass vorhergehende Reinigungsprozesse an den zu verklebenden Konstruktionsteilen sich erübrigen. Ausserdem zeichnen sich die erfindungsgemässen Klebstoffilme durch eine leichte Falzbarkeit um Kanten und durch ein sehr gutes Anpassungsvermögen an diverse Konturen im Temperaturbereich von 10 bis 30°C aus und sind deshalb zur Anwendung mit automatischen Applikationssystemen, wie Applikationsrobotern, geeignet.

Mit den erfindungsgemässen Klebstoffilmen lassen sich Falznähte so gut abdichten, dass zusätzlich keine Feinabdichtungen an den Falznähten vorgenommen werden müssen. Ausserdem lassen sich die mit den erfindungsgemässen Klebstoffilmen verklebten Falznahtkanten im elektrophoretischen Lackierbad vollständig beschichten, womit ein verbesserter Korrosionsschutz an den Falznahtkanten erreicht wird.

Die Aushärtung der Verklebung erfolgt im allgemeinen bei Temperaturen zwischen 80 und 200°C, vorzugsweise zwischen 140 und 180°C, und kann bei verklebten Konstruktionsteilen aus Metall im Verlauf des normalen Lackierprozesses im Einbrennofen vorgenommen werden.

Beispiel 1:

Ein Klebstoffilm mit einer klebrigen Schicht A und einer trockenen Schicht B wird unter Verwendung folgender Zussammensetzungen hergestellt:

| Zusammensetzung der Schicht | A [Gew.-%] | B [Gew.-%] |
|---|---|---|
| Epoxidgruppenhaltiges Addukt aus 73,8 Gew.-% eines Bisphenol A-diglycidylethers (Epoxidgehalt 5,2 bis 5,4 Aeq./kg) 19,8 Gew.-% eines carboxylterminierten Butadien-Acrylnitrilkautschuks (Hycar®CTBN 1300 x 13) und 0,6 Gew.-% Bisphenol A | 26,50 | 26,50 |
| Epoxidgruppenhaltiges Addukt aus 80 Gew.-% eines Bisphenol A-diglycidylethers (Epoxidgehalt 0,35-0,7 Aeq./kg) 19,4 Gew.-% eines carboxylterminierten Butadien-Acrylnitrilkautschuks (Hycar®CTBN 1300 x 13) und 0,6 Gew.-% Bisphenol A | 25,00 | 25,00 |
| Bisphenol A-diglycidylether mit einem Epoxidgehalt von 5,1-5,4 Aeq./kg | 22,50 | 11,20 |
| Bisphenol A-diglycidylether mit einem Epoxidgehalt von 0,35-0,7 Aeq./kg | 4,00 | 5,55 |
| Talk | 14,00 | 25,00 |
| Russ | 2,50 | 2,30 |
| γ-Glycidyloxypropyl-trimethoxysilan | 1,25 | 1,30 |
| Dicyandiamid | 3,25 | 2,41 |
| N-(3-Chlor-4-methylphenyl)-N',N'-dimethylharnstoff | 1,00 | 0,74. |

Die Epoxidverbindungen in den oben angegebenen Zusammensetzungen werden in einem Doppelmuldenkneter bei 100 bis 130°C unter Vakuum homogen vermischt. Nacheinander werden Talk und Russ zugesetzt und ebenfalls unter Vakuum eingemischt, wobei man gleichzeitig die Temperatur der Mischungen auf 80°C fallen lässt. Anschliessend werden die übrigen Komponenten einzeln zugegeben und homogen eingemischt.

Die so hergestellten Zusammensetzungen A und B werden mit einem Rakel-Beschichter bei 80 bis 90°C in folgender Reihenfolge auf ein silikoniertes Trennpapier beschichtet.:

1. 160 bis 200 g/m² Zusammensetzung A (Seite A)
2. eine Lage Polyester-Vlies von etwa 15 bis 20 g/m²
3. 220 bis 260 g/m² Zusammensetzung B (Seite B).

Der so hergestellte Klebstoffilm weist folgende Eigenschaften auf:

Dicke: 0,3 - 0,4 mm
Gewicht: 400 - 450 g/m²
Seite A klebrig bei Raumtemperatur (RT) mit guter Haftung auf öligem Stahl
Seite B trocken bei RT
Lagerstabilität bei Temperaturen <10°C:1-2 Monate
Gelierzeit bei
  100°C: > 5 Stunden
  140°C: 20-30 Minuten
  180°C: < 5 Minuten.

Entfettete und mit einer 10%-igen Lösung von Korrosionsschutzöl "Pfinders P80" in n-Heptan geölte Stahlbleche (Stahl 1403) werden mit dem erfindungsgemässen Klebstoffilm verklebt und während 30 Minuten bei 180°C gehärtet. Die Verklebung weist folgende Eigenschaften auf:
Zugscherfestigkeit nach DIN 53283 auf Stahl 1403
entfettet : 20 N/mm$^2$
geölt : 18 N/mm$^2$
Rollenschälfestigkeit nach DIN 53289 auf Stahl 1403
geölt : 3-5 N/mm$^2$
Glasumwandlungstemperatur : 80-85°C

Beispiel 2:

Analog Beispiel 1 wird ein Filmklebstoff hergestellt unter Verwendung von gleichen Mengen von epoxidgruppenhaltigen Addukten, die anstelle der Bisphenol A-diglycidylether nun gleiche Mengen eines Bisphenol F-diglycidylethers mit gleichem Epoxidgehalt enthalten. Der erhaltene Filmklebstoff weist die gleichen Eigenschaften des Filmklebstoffes von Beispiel 1 auf.

**Patentansprüche**

1. Mehrschichtiger, heisshärtbarer Klebstoffilm mit einer klebrigen äusseren härtbaren Schicht A, enthaltend
(a) 15 bis 40 Gew.-% eines epoxidgruppenhaltigen Adduktes I aus einem aromatischen Di- oder Polyglycidylether mit einem Epoxidgehalt von 3,5 bis 6,5 Aequivalenten/kg und einem carboxylterminierten Butadien-Acrylnitril-Kautschuk oder einem carboxylterminierten Polyester,
(b) 15 bis 40 Gew.-% eines epoxidgruppenhaltigen Adduktes II aus einem aromatischen Diglycidylether mit einem Epoxidgehalt von 0,3 bis 3,0 Aequivalenten/kg und einem carboxylterminierten Butadien-Acrylnitril-Kautschuk oder einem carboxylterminierten Polyester,
(c) 16 bis 30 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 10 bis 25 Gew.-% eines oder mehrerer üblicher Füllstoffe,
(f) 1 bis 6 Gew.-% Dicyandiamid
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen,
einer trockenen äusseren härtbaren Schicht B, enthaltend
(a) 15 bis 40 Gew.-% eines epoxidgruppenhaltigen Adduktes I
(b) 15 bis 40 Gew.-% eines epoxidgruppenhaltigen Adduktes II
(c) 0 bis 15 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 15 bis 40 Gew.-% eines oder mehrerer üblicher Füllstoffe,
(f) 1 bis 6 Gew.-% Dicyandiamid,
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen,
und gegebenefalls einem Trägermaterial zwischen den Schichten A und B.

2. Klebstoffilm gemäss Anspruch 1 mit einer Schicht A, enthaltend
(a) 20 bis 30 Gew.-% eines epoxidgruppenhaltigen Adduktes I,
(b) 20 bis 30 Gew.-% eines epoxidgruppenhaltigen Adduktes II,
(c) 16 bis 30 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 10 bis 25 Gew.-% eines oder mehrerer üblicher Füllstoffe,
(f) 1 bis 6 Gew.-% Dicyandiamid
(g) 0 bis 2 Gew.-% eines Härtungsgeschleunigers und gegebenenfalls
(h) weitere übliche Zusätze, wobei die Komponenten (a) bis (h) sich auf 100 Gew.-% ergänzen.

3. Klebstoffilm gemäss Anspruch 1 mit einer Schicht B, enthaltend
(a) 20 bis 30 Gew.-% eines epoxidgruppenhaltigen Adduktes I,
(b) 20 bis 30 Gew.-% eines epoxidgruppenhaltigen Adduktes II,
(c) 0 bis 15 Gew.-% eines aromatischen Di- oder Polyglycidylethers mit einem Epoxidgehalt von 3,5 bis 6,5 Aequivalenten/kg,
(d) 0 bis 6 Gew.-% eines aromatischen Diglycidylethers mit einem Epoxidgehalt von 0,3 bis 3,0 Aequivalenten/kg,
(e) 15 bis 40 Gew.-% eines oder mehrerer üblicher Füllstoffe,
(f) 1 bis 6 Gew.-% Dicyandiamid,
(g) 0 bis 2 Gew.-% eines Härtungsbeschleunigers und gegebenenfalls
(h) weitere übliche Zusätze, wobei die Komponenten (a) bis (h) sich auf 100 Gew.-% ergänzen.
4. Klebstoffilm gemäss Anspruch 1, bestehend aus einer Schicht A und einer Schicht B.
5. Klebstoffilm gemäss Anspruch 1, enthaltend mehrere Schichten A und B in alternierender Anordnung.
6. Klebstoffilm gemäss Anspruch 1, enthaltend zwischen der Schicht A und B ein Trägermaterial.
7. Klebstoffilm gemäss Anspruch 6, enthaltend ein Vlies als Trägermaterial.
8. Verwendung des Klebstoffilms gemäss Anspurch 1 zum Verkleben von Konstruktionsteilen.
9. Verwendung des Klebstoffilms gemäss Anspruch 1 zum Verkleben von metallischen, nichtgereinigten Konstruktionsteilen.
10. Konstruktionsteile, verklebt mit einem Klebstoffilm gemäss Anspruch 1.

## Claims

1. A multi-layer, heat-curable adhesive film having a tacky external curable layer A, containing
(a) 15 to 40 % by weight of an adduct I containing epoxide groups and formed from an aromatic diglycidyl or polyglycidyl ether having an epoxide content of 3.5 to 6.5 equivalents/kg and a carboxyl-terminated butadiene/acrylonitrile rubber or a carboxyl-terminated polyester,
(b) 15 to 40 % by weight of an adduct II containing epoxide groups and formed from an aromatic diglycidyl ether having an epoxide content of 0.3 to 3.0 equivalents/kg and a carboxyl-terminated butadiene/acrylonitrile rubber or a carboxyl-terminated polyester,
(c) 16 to 30 % by weight of an aromatic diglycidyl or polyglycidyl ether having an epoxide content of 3.5 to 6.5 equivalents/kg,
(d) 0 to 6 % by weight of an aromatic diglycidyl ether having an epoxide content of 0.3 to 3.0 equivalents/kg,
(e) 10 to 25 % by weight of one or more customary fillers,
(f) 1 to 6 % by weight of dicyandiamide,
(g) 0 to 2 % by weight of a curing accelerator and, if appropriate,
(h) further customary additives, the components (a) to (h) adding up to 100 % by weight,
a dry external curable layer B, containing
(a) 15 to 40 % by weight of an adduct I containing epoxide groups,
(b) 15 to 40 % by weight of an adduct II containing epoxide groups,
(c) 0 to 15 % by weight of an aromatic diglycidyl or polyglycidyl ether having an epoxide content of 3.5 to 6.5 equivalents/kg,
(d) 0 to 6 % by weight of an aromatic diglycidyl ether having an epoxide content of 0.3 to 3.0 equivalents/kg,
(e) 15 t 40 % by weight of one or more customary fillers,
(f) 1 to 6 % by weight of dicyandiamide,
(g) 0 to 2 % by weight of a curing accelerator,and, if appropriate,
(h) further customary additives, the components (a) to (h) adding up to 100 % by weight,
and, if appropriate, a carrier material between the layers A and B.
2. An adhesive film according to claim 1 having a layer A, containing
(a) 20 to 30 % by weight of an adduct I containing epoxide groups,
(b) 20 to 30 % by weight of an adduct II containing epoxide groups,
(c) 16 to 30 % by weight of an aromatic diglycidyl or polyglycidyl ether having an epoxide content of 3.5 to 6.5 equivalents/kg,
(d) 0 to 6 % by weight of an aromatic diglycidyl ether having an epoxide content of 0.3 to 3.0 equivalents/kg,
(e) 10 to 25 % by weight of one or more customary fillers,
(f) 1 to 6 % by weight of dicyandiamide,
(g) 0 to 2 % by weight of a curing accelerator, and, if appropriate,
(h) further customary additives, the components (a) to (h) adding up to 100 % by weight.

3. An adhesive film according to claim 1, having a layer B, containing
(a) 20 to 30 % by weight of an adduct I containing epoxide groups,
(b) 20 to 30 % by weight of an adduct II containing epoxide groups,
(c) 0 to 15 % by weight of an aromatic diglycidyl or polyglycidyl ether having an epoxide content of 3.5 to 6.5 equivalents/kg,
(d) 0 to 6 % by weight of an aromatic diglycidyl ether having an epoxide content of 0.3 to 3.0 equivalents/kg,
(e) 15 to 40 % by weight of one or more customary fillers,
(f) 1 to 6 % by weight of dicyandiamide,
(g) 0 to 2 % by weight of a curing accelerator, and, if appropriate,
(h) further customary additives, the components (a) to (h) adding up to 100 % by weight.

4. An adhesive film according to claim 1, consisting of a layer A and a layer B.

5. An adhesive film according to claim 1, containing a plurality of layers A and B in an alternating arrangement.

6. An adhesive film according to claim 1, containing a carrier material between the layer A and the layer B.

7. An adhesive film according to claim 6, containing a nonwoven as the carrier material.

8. The use of the adhesive film according to claim 1 for bonding structural components.

9. The use of the adhesive film according to claim 1 for bonding metallic structural components which have not been cleaned.

10. Structural components bonded with an adhesive film according to claim 1.

## Revendications

1. Pellicule adhésive multicouche thermodurcissable qui comporte : une couche durcissable collante extérieure A contenant :
(a) de 15 à 40% en poids d'un produit d'addition I contenant des radicaux époxy et dérivant d'un éther di- ou poly-glycidylique aromatique dont la teneur en époxy est de 3,5 à 6,5 équivalents/kg et d'un caoutchouc butadiène/acrylonitrile à radicaux carboxy terminaux ou d'un polyester à radicaux carboxy terminaux,
(b) de 15 à 40% en poids d'un produit d'addition II contenant des radicaux époxy et dérivant d'un éther diglycidylique aromatique dont la teneur en époxy est de 0,3 à 3,0 équivalents/kg et d'un caoutchouc butadiène/acrylonitrile à radicaux carboxy terminaux ou d'un polyester à radicaux carboxy terminaux,
(c) de 16 à 30% en poids d'un éther di- ou polyglycidylique aromatique dont la teneur en époxy est de 3,5 à 6,5 équivalents/kg,
(d) de 0 à 6% en poids d'un éther diglycidylique aromatique dont la teneur en époxy est de 0,3 à 3,0 équivalents/kg,
(e) de 10 à 25% en poids d'une ou plusieurs charges usuelles,
(f) de 1 à 6% en poids de cyanoguanidine,
(g) de 0 à 2% en poids d'un accélérateur de durcissement, et éventuellement
(h) d'autres additifs usuels, la somme des teneurs en les composantes (a) à (h) étant égale à 100% en poids,
une couche durcissable sèche extérieure B contenant :
(a) de 15 à 40% en poids d'un produit d'addition I contenant des radicaux époxy,
(b) de 15 à 40% en poids d'un produit d'addition II contenant des radicaux époxy,
(c) de 0 à 15% en poids d'un éther di- ou poly-glycidylique aromatique dont la teneur en époxy est de 3,5 à 6,5 équivalents/kg,
(d) de 0 à 6% en poids d'un éther diglycidylique aromatique dont la teneur en époxy est de 0,3 à 3,0 équivalents/kg,
(e) de 15 à 40% en poids d'une ou plusieurs charges usuelles,
(f) de 1 à 6% en poids de cyanoguanidine,
(g) de 0 à 2% en poids d'un accélérateur de durcissement, et éventuellement
(h) d'autres additifs usuels, la somme des teneurs en les composantes (a) à (h) étant égale à 100% en poids,
et éventuellement une matière support entre les couches A et B.

2. Pellicule adhésive selon la revendication 1 comportant une couche A qui contient :
(a) de 20 à 30% en poids d'un produit d'addition I contenant des radicaux époxy,
(b) de 20 à 30% en poids d'un produit d'addition II contenant des radicaux époxy,
(c) de 16 à 30% en poids d'un éther di- ou polyglycidylique aromatique dont la teneur en époxy est de 3,5

à 6,5 équivalents/kg,

(d) de 0 à 6% en poids d'un éther diglycidylique aromatique dont la teneur en époxy est de 0,3 à 3,0 équivalents/kg,

(e) de 10 à 25% en poids d'une ou plusieurs charges usuelles,

(f) de 1 à 6% en poids de cyanoguanidine,

(g) de 0 à 2% en poids d'un accélérateur de durcissement, et éventuellement

(h) d'autres additifs usuels, la somme des teneurs en les composantes (a) à (h) étant égale à 100% en poids.

3. Pellicule adhésive selon la revendication 1 comportant une couche B qui contient :

(a) de 20 à 30% en poids d'un produit d'addition I contenant des radicaux époxy,

(b) de 20 à 30% en poids d'un produit d'addition II contenant des radicaux époxy,

(c) de 0 à 15% en poids d'un éther di- ou poly-glycidylique aromatique dont la teneur en époxy est de 3,5 à 6,5 équivalents/kg,

(d) de 0 à 6% en poids d'un éther diglycidylique aromatique dont la teneur en époxy est de 0,3 à 3,0 équivalents/kg,

(e) de 15 à 40% en poids d'une ou plusieurs charges usuelles,

(f) de 1 à 6% en poids de cyanoguanidine,

(g) de 0 à 2% en poids d'un accélérateur de durcissement, et éventuellement

(h) d'autres additifs usuels,

la somme des teneurs en les composantes (a) à (h) étant égale à 100% en poids.

4. Pellicule adhésive selon la revendication 1 qui est constituée d'une couche A et d'une couche B.

5. Pellicule adhésive selon la revendication 1 qui comporte plusieurs couches A et B disposées alternativement.

6. Pellicule adhésive selon la revendication 1 qui comporte, entre la couche A et la couche B, une matière support.

7. Pellicule adhésive selon la revendication 6 qui comporte un non-tissé comme matière support.

8. Application de la pellicule adhésive selon la revendication 1 au collage d'éléments de construction.

9. Application de la pellicule adhésive selon la revendication 1 au collage d'éléments de construction métalliques non nettoyés.

10. Eléments de construction qui ont été collés avec une pellicule adhésive selon la revendication 1.